# FASCICULE DE BREVET EUROPEEN

(11) **EP 2 875 164 B1**
(45) Date de publication et mention de la délivrance du brevet: **06.04.2016**
(21) Numéro de dépôt: 13728511.0
(22) Date de dépôt: 13.05.2013
(51) Int. Cl.: C23C 2/06, B60J 5/04

(54) **ASSEMBLAGE D'UNE PIÈCE À BASE D'ALUMINIUM ET D'UNE PIÈCE EN ACIER MUNIE D'UN REVÊTEMENT À BASE D'UN ALLIAGE ZNAIMG**
ANORDNUNG EINER ALUMINIUMKOMPONENTE UND EINES STAHLBAUTEILS MIT ZNALMG-LEGIERUNGSBESCHICHTUNG
ASSEMBLY OF AN ALUMINUM COMPONENT AND OF A STEEL COMPONENT HAVING A ZNALMG ALLOY COATING

(43) Date de publication de la demande: 27.05.2015
(73) Titulaire: Arcelormittal, 1160 Luxembourg (LU)
(72) Inventeur: ALLELY, Christian, F-57283 Maizieres-les-Metz Cedex (FR); COFFIGNY-GREGOIRE, Astrid, F-57525 Talange (FR); DOSDAT, Laurence, F-57160 Rozerieulles (FR); MOREL, Stéphane, F-57070 Metz (FR)
(74) Mandataire: Domenego, Bertrand
(86) Numéro de dépôt international: PCT/IB2013/000929
(87) Numéro de publication internationale: WO 2014/184599

(56) Documents cités:
- EP-A1- 1 806 200
- EP-A1- 2 141 255
- US-A- 3 505 043
- KÖNIG F: "Kontaktkorrosion an Aluminium/Stahl- und Magnesium/Stahl-Verbindungen", GALVANOTECHNIK, EUGEN G.LEUZE VERLAG, SAULGAU/WURTT, DE, vol. 89, no. 7, 1 juillet 1998 (1998-07-01), pages 2199-2209, XP002151143, ISSN: 0016-4232

## Description

La présente invention est relative à un assemblage d'une pièce à base d'aluminium et d'une pièce en acier munie d'un revêtement à base d'un alliage zinc-aluminium-magnésium sur au moins une de ses faces mise en contact au moins partiel avec la pièce à base d'aluminium.

Ces assemblages sont par exemple destinés à la fabrication de pièces de carrosserie automobiles, telles que des ouvrants de type portes, sans pour autant y être limité.

Les revêtements métalliques comprenant essentiellement du zinc sont traditionnellement utilisés pour leur bonne protection contre la corrosion. L'ajout de magnésium au revêtement augmente nettement la résistance à la corrosion de ces revêtements, ce qui peut permettre de réduire leur épaisseur ou d'augmenter la garantie de protection contre la corrosion dans le temps. De plus, l'ajout d'aluminium permet également d'améliorer la résistance à la corrosion.

La recherche constante de réduction de poids afin de réduire les émissions de CO2 amène à rechercher des solutions hybrides associant notamment l'aluminium et l'acier revêtu de zinc. Cependant, une telle association génère des phénomènes complexes et évolutifs de corrosion par couplage galvanique des deux matériaux.

La demande EP 2 141 255 décrit des assemblages dans lesquels on ajoute au revêtement de l'acier du magnésium en une quantité pouvant notamment varier entre 0,8 et 10% en poids. Il est également envisagé d'ajouter de 0,8 à 3,5% d'aluminium à ce même revêtement.

Cependant, la résistance à la corrosion de ces assemblages reste trop faible dans le temps et il subsiste un besoin de l'améliorer.

A cet effet, l'invention concerne un assemblage selon la revendication 1 et son utilisation selon la revendication 6.

L'assemblage peut également comprendre les caractéristiques de la revendication 2 ou de la revendication 3.

L'invention concerne également une pièce selon la revendication 4 ou 5, un véhicule selon la revendication 6 et une utilisation selon la revendication 7.

L'invention va à présent être illustrée par des exemples donnés à titre indicatif, et non limitatif, et en référence aux figures annexées sur lesquelles :
- la figure 1 représente schématiquement un assemblage selon l'invention,
- la figure 2 représente des courbes de mesure de l'évolution de la profondeur moyenne de corrosion des panneaux d'aluminium au sein d'assemblages selon l'invention en comparaison à des assemblages selon l'art antérieur,
- la figure 3 représente des courbes de mesure de l'évolution de la densité de courant de couplage galvanique d'assemblages selon l'invention en comparaison à des assemblages selon l'art antérieur.

L'assemblage 1 selon l'invention comprend tout d'abord un premier élément à base d'aluminium qui prend ici la forme d'un panneau 2. On recouvre par là l'aluminium pur et tous ses alliages comprenant au moins 85% en poids d'aluminium, parmi lesquels les séries 1000 à 7000 qui comprennent de l'aluminium sans élément d'addition et des alliages de compositions variées :
- aluminium sans élément d'addition : 1000
- aluminium + cuivre : 2000
- aluminium + manganèse : 3000
- aluminium + silicium : 4000
- aluminium + magnésium : 5000
- aluminium + magnésium + silicium : 6000
- aluminium + zinc + magnésium : 7000

Ce panneau 2 présente des dimensions adaptées à l'usage ultérieur de l'assemblage selon l'invention. Dans un mode de réalisation préféré, l'assemblage 1 en question est intégré à une porte de véhicule, le panneau à base d'aluminium étant positionné du côté extérieur de ce véhicule.

Le panneau à base d'aluminium 2 peut en outre comporter sur au moins une partie de sa surface un ou plusieurs revêtements de protection de type phosphatation et/ou cataphorèse, tels que ceux appliqués usuellement sur les caisses en blanc de véhicules. L'assemblage avec le deuxième élément en acier revêtu 3 étant réalisé généralement avant passage de la caisse en blanc dans les bains de revêtements de type phosphatation et/ou cataphorèse, seules les parties situées en dehors de la zone d'assemblage seront alors revêtues ainsi.

Le deuxième élément des assemblages selon l'invention est donc un élément 3 en acier muni sur au moins une de ses faces d'un revêtement métallique à base d'alliage zinc-aluminium-magniésium comprenant de 2,3 à 3,3 % en poids de magnésium, de 3,5 à 3,9 % en poids d'aluminium, le reste du revêtement métallique étant du zinc, les impuretés inévitables et éventuettement un ou plusieurs éléments additionnels choisis parmi Si, Sb, Pb, Ti, Ca, Mn, Sn, La, Ce, Cr, Ni ou Bi.

La teneur en poids de chaque élément additionnel est inférieure à 0,3%. Les éléments additionnels peuvent permettre, entre autres, d'améliorer la ductilité ou l'adhésion du revêtement sur l'élément en acier. L'homme du métier qui connaît leurs effets sur les caractéristiques du revêtement saura les employer en fonction du but complémentaire recherché.

Le revêtement peut enfin contenir des éléments résiduels provenant, par exemple du bain de revêtement lorsqu'on utilise un procédé de revêtement au trempé à chaud. Celui-ci peut être pollué par des impuretés provenant des lingots d'alimentation ou résultant du passage de l'élément en acier dans le bain de revêtement. On citera notamment le fer dont la teneur peut aller jusqu'à 5% en poids et est généralement comprise entre 2 et 4% en poids dans le revêtement.

Dans un mode de réalisation préféré, le revêtement comprend de 2,3 à 3,3 % en poids de magnésium et de-3,6 à 3,9% en poids d'aluminium.

Dans un mode de réalisation préféré, le rapport massique entre le magnésium et l'aluminium dans le revêtement métallique est strictement inférieur ou égal à 1, de préférence strictement inférieur à 1, et de préférence encore strictement inférieur à 0,9.

Le revêtement métallique a généralement une épaisseur inférieure ou égale à 30 voire 25 µm et supérieure ou égale à 3 voire 5 µm.

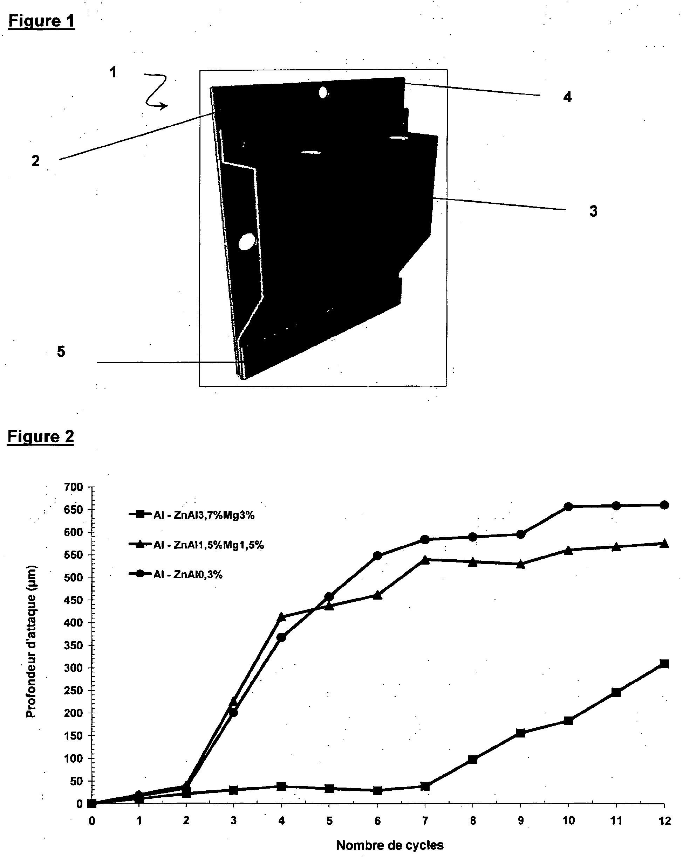

Comme on l'a évoqué précédemment, les deux éléments 2, 3 sont assemblés de telle sorte que la face revêtue de l'élément 3 en acier soit en contact au moins partiel avec l'élément 2 à base d'aluminium. Dans un mode de réalisation préféré, l'assemblage peut être notamment fait par un procédé mécanique tel que le sertissage des deux éléments dans une zone d'assemblage 5 située, dans l'exemple représenté en figure 1, dans la partie inférieure de la porte formée par l'assemblage 1.

Un tel sertissage pourra consister en un simple repli d'un des éléments autour de l'autre, tel que représenté en figure 1 où l'élément 2 vient entourer l'élément 3. Il est bien sur possible dératiser tout autre type d'assemblage mécanique connu de l'homme du métier.

Il est également possible d'assembler les panneaux selon l'invention par collage structural au moyen d'un adhésif ou d'un mastic structurel qui permettent un assemblage tel que les efforts mécaniques subis par l'un ou l'autre des éléments 2, 3 seront transmis à l'autre élément 3, 2. Les couches d'adhésifs et/ou de mastics étant très fines (généralement inférieures à 5 mm, voire inférieures à 1mm et même inférieures à 200 µm), on considérera qu'un tel assemblage collé revient à mettre en contact les deux éléments 2, 3 au même titre qu'un simple assemblage mécanique.

Il est bien sur possible de combiner collage structural et assemblage mécanique pour renforcer la tenue de l'ensemble.

Afin de mettre en évidence les performances obtenues grâce aux assemblages selon l'invention, des exemples concrets de réalisation vont être détaillés en comparaison avec des assemblages selon l'art antérieur.

### Exemples

Pour l'ensemble des exemples de réalisation détaillés, on a réalisé des échantillons d'assemblage de panneaux en aluminium AA6061 et de panneaux en acier revêtus d'alliages zinc-aluminium-(magnésium) de composition variable, les revêtements présentant une épaisseur uniforme de 7,5 µm.

Ces assemblages se composent d'un premier panneau en acier revêtu, d'une taille de 10 cm en largeur sur 20 cm en hauteur. On vient assembler par collage un panneau en aluminium d'une taille de 10 cm en largeur sur 4 cm en hauteur et présentant une épaisseur de 1mm. Le panneau en aluminium est positionné au centre du panneau en acier et l'espacement entre les deux panneaux du à la présence d'adhésif est de 120 µm, ce qui simule un assemblage tel que celui d'une porte de véhicule automobile. La zone active où les deux parements non peints se font face a une dimension de 6 cm en largeur sur 4 cm en hauteur. Un fil de cuivre relie les deux parements afin de les mettre en contact électrique et ainsi pouvoir simuler la corrosion galvanique dans la zone active.

La surface non active des deux parements est protégée par une peinture obtenue par phosphatation suivie de cataphorèse. La phosphatation est réalisée en trois étapes avec des produits de la société Chemetall: (i) dégraissant Gardoclean S 5176 + additif H7352, (ii) affineur Gardolene ZL6, (iii) bain de phosphatation Gardobond R24TA. La cataphorèse est réalisée avec des produits de la société PPG : liant W772 + additif P978 ; T = 32°C; t = 150s; U= 200V; Cuisson: T = 180°C ; durée = 35 min; épaisseur cataphorèse : 20 µm.

### Test de corrosion

Le test utilisé est le test VDA 233-102 qui prévoit de soumettre des échantillons à une série de cycles de traitements, chaque cycle durant une semaine, avec une succession de sous-cycles A, B et C de 24h chacun.
- cycle A : cycle avec traitement pendant trois heures par mise en présence avec un brouillard salin à 35°C,
- cycle B : cycle de 24 heures sans traitement avec un brouillard salin, à une température variant entre 25 et 50°C et une humidité relative variant entre 70 et 95%,
- cycle C : cycle sans traitement avec un brouillard salin, à une température variant entre -15 et 50°C et une humidité relative variant entre 70 et 95%.

La solution saline utilisée est une solution aqueuse contenant 1% en poids de chlorure de sodium.

### Test de couplage galvanique

Pour évaluer la densité de courant galvanique généré par l'assemblage de l'aluminium et de l'acier revêtu, on relie électriquement le panneau d'aluminium dans sa zone revêtue par cataphorèse et la zone inférieure du panneau d'acier revêtu, en interposant un ampèremètre à résistance nulle (Potentiostat Bio-Logic VMP3).

### Test de triangulation laser

Afin d'évaluer le degré de corrosion des zones du panneau d'acier revêtu faisant partie des échantillons d'assemblage précédemment décrits, on procède à des mesures de profondeur d'attaque de l'aluminium par triangulation laser sur l'ensemble de la surface d'un échantillon, puis on en extrait la valeur maximale observée, en micromètres.

### Essais

Des échantillons d'assemblage de panneaux en aluminium et de panneaux en acier revêtus d'alliages zinc-aluminium-(magnésium) de composition variable tels que précédemment décrits ont été réalisés puis soumis au test VDA 233-102.

A l'issue de chaque cycle, un premier échantillon a été soumis à des mesures de profondeur d'attaque en corrosion de l'élément en aluminium par une technique de triangulation laser.

Les résultats à 6 et 12 cycles sont rassemblés dans le tableau 1 et les résultats détaillés, cycle par cycle sont représentés en figure 2.

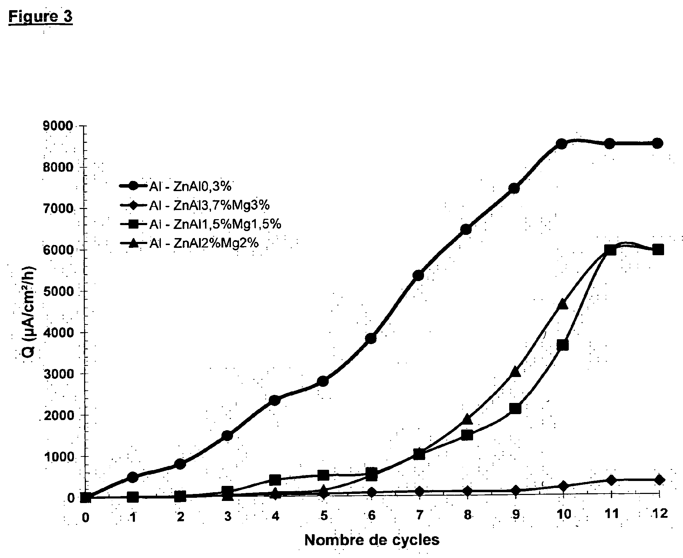

Un second échantillon a été ensuite soumis à une mesure de potentiel de couplage galvanique. Les résultats à 6 et 12 cycles sont rassemblés dans le tableau 2 et les résultats détaillés, cycle par cycle sont représentés en figure 3.

**Tableau 1 - Profondeur d'attaque maximale**

| Echantillon | % Al en poids | % Mg en poids | P (µm) après 6 cycles | P (µm) après 12 cycles |
|---|---|---|---|---|
| 1 | 0,3 | 0 | 550 | 660 |
| 2 | 1,5 | 1,5 | 460 | 570 |
| 3 | 3,7 | 3,0 | 30 | 310 |

On constate que l'échantillon 3 permet d'obtenir des résultats très sensiblement meilleurs que les essais comparatifs 1 et 2. On observe certes une certaine amélioration de la résistance à la corrosion entre l'échantillon 2 et l'échantillon 1 après 12 cycles, mais l'amélioration obtenue dans l'échantillon 3 est d'une ampleur bien plus importante et tout à fait surprenante. En outre, si on considère les résultats au bout de 6 cycles, on constate une différence de comportement extrêmement importante entre l'essai selon l'invention et les essais comparatifs, la profondeur d'attaque maximale de l'élément en aluminium étant divisée par un facteur de plus de 15.

**Tableau 2 - Couplage galvanique**

| Echantillon | % Al en poids | % Mg en poids | Q (µA/cm²/h) après 6 cycles | Q (µA/cm²/h) après 12 cycles |
|---|---|---|---|---|
| 1 | 0,3 | 0 | 3800 | 8470 |
| 2 | 1,5 | 1,5 | 540 | 5900 |
| 3 | 2,0 | 2,0 | 490 | 5900 |
| 4 | 3,7 | 3,0 | 80 | 330 |

On constate que l'échantillon 4 permet d'obtenir des résultats très sensiblement meilleurs que les essais comparatifs 1 à 3. On observe certes une certaine amélioration de la résistance à la corrosion entre les échantillons 2 et 3 et l'échantillon 1, mais l'amélioration obtenue dans l'échantillon 4 est là-aussi d'une ampleur bien plus importante et tout à fait surprenante, d'autant plus que l'échantillon 3, comportant des teneurs plus importantes en aluminium et magnésium que l'échantillon 2, présente au final des performances identiques à celles de l'échantillon 2, ce qui ne laissait pas prévoir qu'une augmentation supplémentaire des teneurs en aluminium et en magnésium permettrait d'améliorer les performances, en particulier dans ces proportions.

## Revendications

1. Assemblage (1) d'un élément (2) à base d'aluminium et d'un élément (3) en acier muni sur au moins une de ses faces d'un revêtement métallique à base d'alliage zinc-aluminium-magnésium comprenant de 2,3 à 3,3 % en poids de magnésium, de 3,5 à 3,9 % en poids d'aluminium, le reste du revêtement métallique étant du zinc, les impuretés inévitables, éventuellement du fer avec une teneur pouvant aller jusqu'à 5% en poids, et éventuellement un ou plusieurs éléments additionnels choisis parmi Si, Sb, Pb, Ti, Ca, Mn, Sn, La, Ce, Cr, Ni ou Bi, la teneur en poids de chaque élément additionnel étant inférieure à 0,3%, ladite face revêtue de l'élément (3) en acier étant en contact au moins partiel avec ledit élément (2) à base d'aluminium, ledit contact pouvant être réalisé par l'intermédiaire d'une couche d'adhésif et/ou de mastic dont l'épaisseur est inférieure à 5 mm.

2. Assemblage selon la revendication 1, dans lequel le revêtement métallique à base d'alliage zinc-aluminium-magnésium comprend de 2,3 à 3,3 % en poids de magnésium et de 3,6 à 3,9 % en poids d'aluminium, le reste du revêtement métallique étant du zinc, les impuretés inévitables, éventuellement du fer avec une teneur pouvant aller jusqu'à 5% en poids, et éventuellement un ou plusieurs éléments additionnels choisis parmi Si, Sb, Pb, Ti, Ca, Mn, Sn, La, Ce, Cr, Ni ou Bi, la teneur en poids de chaque élément additionnel étant inférieure à 0,3%.

3. Assemblage (1) selon la revendication 1 ou 2, dans lequel l'élément (2) à base d'aluminium et l'élément (3) en acier sont assemblés par sertissage.

4. Pièce pour véhicule comprenant au moins un assemblage (1) selon l'une quelconque des revendications 1 à 3.

5. Pièce selon la revendication 4 constituant une porte de véhicule, l'élément (2) à base d'aluminium constituant la partie extérieure de ladite porte et l'élément (3) en acier constituant la partie intérieure de ladite porte.

6. Véhicule comprenant au moins une pièce selon la revendication 4 ou 5.

7. Utilisation d'une pièce en acier munie sur au moins l'une de ses face d'un revêtement métallique à base d'alliage zinc-aluminium-magnésium comprenant de 2,3 à 3,3% en poids d'aluminium, de 3,5 à 3,9% en poids de magnésium, le reste du revêtement métallique étant du zinc, les impuretés inévitables, éventuellement du fer avec une teneur pouvant aller jusqu'à 5% en poids, et éventuellement un ou plusieurs éléments additionnels choisis parmi Si, Sb, Pb, Ti, Ca, Mn, Sn, La, Ce, Cr, Ni ou Bi, la teneur en poids de chaque élément additionnel étant inférieure à 0,3%, pour la fabrication d'assemblages (1) selon l'une quelconque des revendications 1 à 3 ou de pièces selon l'une quelconque des revendications 4 ou 5.

## Patentansprüche

1. Anordnung (1) eines Elements (2) auf Aluminiumbasis und eines Elements (3) aus Stahl, welches auf mindestens einer seiner Seiten mit einer Metallbeschichtung auf Zink-Aluminium-Magnesium-Legierungsbasis, aufweisend 2,3 bis 3,3 Gewichts-% Magnesium, 3,5 bis 3,9 Gewichts-% Aluminium, wobei der Rest der Metallbeschichtung Zink, die unvermeidlichen Verunreinigungen, gegebenenfalls Eisen mit einem Gehalt bis zu 5 Gewichts-% und gegebenenfalls ein oder mehrere zusätzliche Elemente ausgewählt aus Si, Sb, Pb, Ti, Ca, Mn, Sn, La, Ce, Cr, Ni oder Bi sind, versehen ist, wobei der Gewichtsgehalt jedes zusätzlichen Elements weniger als 0,3 % ist, wobei die beschichtete Seite des Elements (3) aus Stahl mindestens teilweise in Kontakt mit dem Element (2) auf Aluminiumbasis ist, wobei der Kontakt über eine Schicht aus Klebstoff und / oder Dichtstoff mit einer Dicke von weniger als 5 mm realisiert sein kann.

2. Anordnung nach Anspruch 1, wobei die Metallbeschichtung auf Zink-Aluminium-Magnesium-Legierungsbasis 2,3 bis 3,3 Gewichts-% Magnesium und 3,6 bis 3,9 Gewichtes-% Aluminium aufweist, wobei der Rest der Metallbeschichtung Zink, die unvermeidbaren Verunreinigungen, gegebenenfalls Eisen mit einem Gehalt bis zu 5 Gewichtes-% und gegebenenfalls ein oder mehrere zusätzliche Elemente ausgewählt aus Si, Sb, Pb, Ti, Ca, Mn, Sn, La, Ce, Cr, Ni oder Bi ist, wobei der Gewichtsgehalt jedes zusätzlichen Elements weniger als 0,3 % ist, sind.

3. Anordnung (1) nach Anspruch 1 oder 2, wobei das Element (2) auf Aluminiumbasis und das Element (3) aus Stahl durch Bördeln verbunden sind.

4. Teil für Fahrzeug, aufweisend mindestens eine Anordnung (1) nach einem der Ansprüche 1 bis 3.

5. Teil nach Anspruch 4, welches eine Fahrzeugtür bildet, wobei das Element (2) auf Aluminiumbasis den äußeren Teil der Tür bildet und das Element (3) aus Stahl den inneren Teil der Tür bildet.

6. Fahrzeug aufweisend mindestens ein Teil nach Anspruch 4 oder 5.

7. Verwendung eines Teils aus Stahl, welches auf mindestens einer seiner Seiten mit einer Metallbeschichtung auf Zink-Aluminium-Magnesium-Legierungsbasis, aufweisend 2,3 bis 3,3 Gewichtes-% Magnesium, 3,5 bis 3,9 Gewichts-% Aluminium, wobei der Rest der Metallbeschichtung Zink, die unvermeidlichen Verunreinigungen, gegebenenfalls Eisen mit einem Gehalt bis zu 5 Gewichts-% und gegebenenfalls ein oder mehrere zusätzliche Elemente ausgewählt aus Si, Sb, Pb, Ti, Ca, Mn, Sn, La, Ce, Cr, Ni oder Bi sind, versehen ist, wobei der Gewichtsgehalt jedes zusätzlichen Elements weniger als 0,3 % ist, für die Herstellung von Anordnungen (1) nach einem der Ansprüche 1 bis 3 oder von Teilen nach einem der Ansprüche 4 oder 5.

## Claims

1. An assembly (1) of an aluminum-based element (2) and an element (3) made of steel provided on at least one of the surfaces thereof, with a metal coating made of a zinc-aluminum-magnesium alloy including from 2.3% to 3.3% by weight of magnesium, from 3.5% to 3.9% by weight of aluminum, the remainder of the metal coating consisting of zinc, inevitable impurities, possibly iron with a content which may go up to 5% by weight, and possibly one or more additional elements selected from among Si, Sb, Pb, Ti, Ca, Mn, Sn, La, Ce, Cr, Ni or Bi, the content by weight of each additional element being less than 0.3%, the said coated surface of the element (3) made of steel is in at least partial contact with the said aluminum-based element (2), wherein the said contact may be brought about by means of a layer of adhesive and / or sealant whose thickness is less than 5 mm.

2. An assembly according to claim 1, wherein the metal coating made of a zinc-aluminum-magnesium alloy includes from 2.3% to 3.3% by weight of magnesium, and from 3.6% to 3.9% by weight of aluminum, the remainder of the metal coating consisting of zinc, inevitable impurities, possibly iron with a content which may go up to 5% by weight, and possibly one or more additional elements selected from among Si, Sb, Pb, Ti, Ca, Mn, Sn, La, Ce, Cr, Ni or Bi, the content by weight of each additional element being less than 0.3%.

3. An assembly (1) according to claim 1 or 2, wherein the aluminum-based element (2) and the element (3) made of steel are assembled by crimping.

4. A part for a vehicle comprising at least one assembly (1) according to any one of claims 1 to 3.

5. A part according to claim 4 constituting a vehicle door, the aluminum-based element (2) constituting the exterior part of the said door and the element (3) made of steel constituting the interior part of the said door.

6. A vehicle including at least one part according to claim 4 or 5.

7. Use of a part made of steel provided on at least one of the surfaces thereof, with a metal coating made of a zinc-aluminum-magnesium alloy including from 2.3% to 3.3% by weight of magnesium, from 3.5% to 3.9% by weight of aluminum, the remainder of the metal coating consisting of zinc, inevitable impurities, possibly iron with a content which may go up to 5% by weight, and possibly one or more additional elements selected from among Si, Sb, Pb, Ti, Ca, Mn, Sn, La, Ce, Cr, Ni or Bi, the content by weight of each additional element being less than 0.3%, for the manufacture of assemblies (1) according to any one of claims 1 to 3 or of parts according to any one of claims 4 or 5.
